# EUROPÄISCHE PATENTSCHRIFT

(11) **EP 1 407 943 B1**
(45) Veröffentlichungstag und Bekanntmachung des Hinweises auf die Patenterteilung: **02.11.2006**
(21) Anmeldenummer: 03019667.9
(22) Anmeldetag: 08.09.2003
(51) Int. Cl.: B60R 21/20

(54) **Gefalteter Gassack für ein Fahrzeuginsassen-Rückhaltesystem**
Folded airbag for a vehicle occupant restraint system
Coussin gonflable plié pour un système de retenue d'un occupant de véhicule

(30) Priorität: 07.10.2002 DE 10246767
(43) Veröffentlichungstag der Anmeldung: 14.04.2004
(73) Patentinhaber: TRW Automotive GmbH, 73553 Alfdorf (DE)
(72) Erfinder: Fischer, Anton, 73579 Leinweiler (DE)
(74) Vertreter: Sties, Jochen

(56) Entgegenhaltungen:
- EP-A- 0 945 312
- GB-A- 2 343 420

## Beschreibung

Die Erfindung betrifft einen gefalteten Gassack für ein Fahrzeuginsassen-Rückhaltesystem.

Um den Gassack im gefalteten Zustand zu halten und damit die nebeneinanderliegenden Wandungsabschnitte in ihrer Position zu fixieren, ist im Stand der Technik bekannt, den gefalteten Gassack mit einer Banderole oder einem ähnlichen Fixierungsmittel zu umgeben. Die Banderole ist so ausgelegt, daß sie beim Entfalten des Gassacks aufreißt und den Gassack freigibt, damit dieser sich frei entfalten kann.

Aus der GB-A-2 343 420 ist ein gefalteter Gassack bekannt, bei dem jeweils benachbarte Wandungsabschnitte durch einzelne Reißnähte aneinander fixiert werden, um die Falten im Gassackpaket aufrechtzuerhalten.

Die Aufgabe der Erfindung besteht darin, ein kostengünstiges Mittel bereitzustellen, mit dem ein Gassack in seiner gefalteten Form gehalten werden kann.

Erfindungsgemäß ist hierfür ein gefalteter Gassack für ein Fahrzeuginsassen-Rückhaltesystem vorgesehen, wobei der Gassack mehrere nebeineinanderliegende Wandungsabschnitte aufweist, wobei eine einzige Packnaht vorgesehen ist, die sich durch mehrere der Wandungsabschnitte erstreckt und diese nebeneinanderliegend fixiert, so daß der gesamte Gassack fixiert ist. Diese Packnaht wird nach dem Falten des Gassacks angebracht, indem durch die nebeneinanderliegenden Wandungsabschnitte hindurchgenäht wird. Die Packnaht ist als Reißnaht ausgeführt, die sich beim Entfalten des Gassacks löst, so daß sich der Gassack frei entfalten kann.

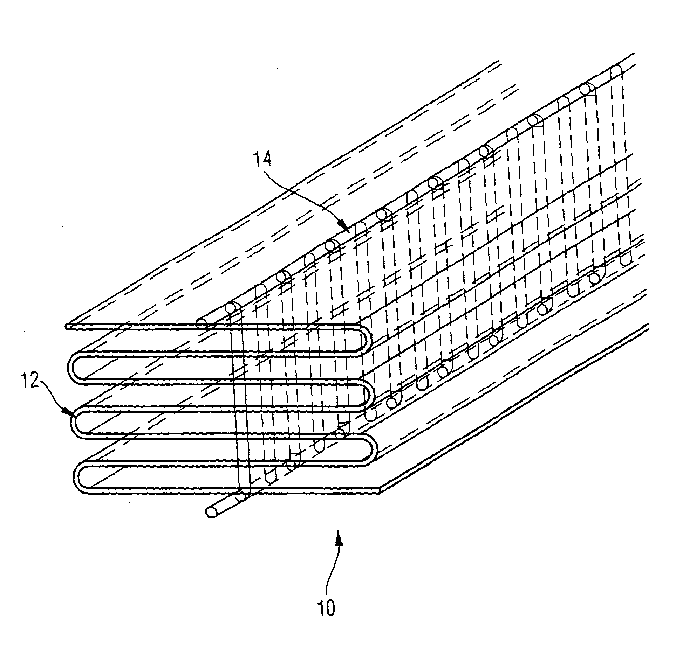

Die Erfindung wird nachfolgend anhand einer bevorzugten Ausführungsform beschrieben, die in der beigefügten einzigen Zeichnung dargestellt ist. In dieser ist schematisch ein Teil eines gefalteten Gassacks gezeigt, der durch eine Packnaht fixiert ist.

In der Figur ist schematisch ein Ausschnitt eines gefalteten Gassacks 10 gezeigt. Beim Falten wurde die Wandung des Gassacks in mehrere nebeneinanderliegende Wandungsabschnitte 12 gefaltet, so daß ein kompaktes Paket gebildet ist. Die nebeneinanderliegenden Wandungsabschnitte 12 sind durch eine Packnaht 14 aneinander fixiert. Die Packnaht 14 erstreckt sich entlang der Längsrichtung des Gassacks, so daß der gesamte Gassack mit einer einzigen Naht fixiert werden kann. Die Packnaht 14 ist als Reißnaht ausgeführt und so dimensioniert, daß sie zu Beginn des Entfaltens des Gassacks aufreißt, wodurch der Entfaltungsvorgang nicht beeinträchtigt wird.

Die gezeigte Packnaht ist insbesondere geeignet für einen Seitenaufprall-Gassack bzw. Kopfschutz-Gassack, der im gefalteten Zustand eine schmale, langgestreckte Form hat. Es ist dann eine einzige Packnaht ausreichend, die sich entlang der Längsrichtung des Wandungspaketes erstreckt.

## Patentansprüche

1. Gefalteter Gassack (10) für ein Fahrzeuginsassen-Rückhaltesystem, wobei der Gassack mehrere nebeneinanderliegende Wandungsabschnitte (12) aufweist, **dadurch gekennzeichnet, daß** eine einzige Packnaht (14) vorgesehen ist, die sich durch mehrere der Wandungsabschnitte (12) erstreckt und diese nebeneinanderliegend fixiert, so daß der gesamte Gassack fixiert ist.

2. Gefalteter Gassack nach Anspruch 1, **dadurch gekennzeichnet, daß** die Packnaht (14) eine Reißnaht ist.

3. Gefalteter Gassack nach Anspruch 1 oder Anspruch 2, **dadurch gekennzeichnet, daß** der Gassack (10) ein Seitenaufprall-Gassack ist.

4. Gefalteter Gassack nach einem der vorhergehenden Ansprüche, **dadurch gekennzeichnet, daß** der Gassack ein Kopfschutz-Gassack ist.

## Claims

1. A folded gas bag (10) for a vehicle occupant restraint system, the gas bag having several wall sections (12) located next to each other, **characterized in that** a single pack seam (14) is provided, which extends through several of the wall sections (12) and fixes them in place in a side-by-side relationship, so that the entire gas bag is fixed in place.

2. The folded gas bag according to Claim 1, **characterized in that** the pack seam (14) is a tear seam.

3. The folded gas bag according to Claim 1 or Claim 2, **characterized in that** the gas bag (10) is a side impact gas bag.

4. The folded gas bag according to any of the preceding claims, **characterized in that** the gas bag is a head protection gas bag.

## Revendications

1. Coussin à gaz (10) plié pour un système de retenue de passager de véhicule, le coussin à gaz présentant plusieurs tronçons de paroi (12) situés côte à côte, **caractérisé en ce qu'**il est prévu une seule couture d'empaquetage (14) qui s'étend à travers plusieurs des tronçons de paroi (12) et fixent ceux-ci côte à côte, de sorte que le coussin à gaz tout entier est fixé.

2. Coussin à gaz plié selon la revendication 1, **caractérisé en ce que** la couture d'empaquetage (14) est une couture de déchirement.

3. Coussin à gaz plié selon la revendication 1 ou la revendication 2, **caractérisé en ce que** le coussin à gaz (10) est un coussin à gaz d'impact latéral.

4. Coussin à gaz plié selon l'une des revendications précédentes, **caractérisé en ce que** le coussin à gaz est un coussin à gaz de protection de tête.
